# EUROPEAN PATENT SPECIFICATION

(11) **EP 4 591 158 B1**
(45) Date of publication and mention of the grant of the patent: **08.07.2026**
(21) Application number: 23771894.5
(22) Date of filing: 21.09.2023
(51) Int. Cl.: G06F 7/72

(54) **METHOD FOR SECURING AN OPERATION USING A PRIVATE KEY AGAINST SIDE-CHANNEL ATTACKS**
VERFAHREN ZUR SICHERUNG EINER OPERATION UNTER VERWENDUNG EINES PRIVATEN SCHLÜSSELS GEGEN SEITENKANALANGRIFFE
PROCÉDÉ DE SÉCURISATION D'UNE OPÉRATION À L'AIDE D'UNE CLÉ PRIVÉE CONTRE DES ATTAQUES PAR CANAUX AUXILIAIRES

(30) Priority: 21.09.2022 EP 22306385
(43) Date of publication of application: 30.07.2025
(73) Proprietor: THALES DIS FRANCE SAS, 92190 Meudon (FR)
(72) Inventor: SINARDI, Guntur, 92190 MEUDON (FR)
(74) Representative: Bricks, Amélie
(86) International application number: PCT/EP2023/076148
(87) International publication number: WO 2024/062071

(56) References cited:
- US-A1- 2018 060 566
- KARINE GANDOLFI-VILLEGAS ET AL: "Dynamic Runtime Methods to Enhance Private Key Blinding", IACR, INTERNATIONAL ASSOCIATION FOR CRYPTOLOGIC RESEARCH, vol. 20130722:122954, 16 July 2013 (2013-07-16), pages 1 - 15, XP061007931
- CIET M ET AL: "(Virtually) Free randomization techniques elliptic curve cryptography", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, vol. 2836, 10 October 2003 (2003-10-10), pages 348 - 359, XP007912842, ISBN: 978-3-540-24128-7

## Description

### FIELD OF THE INVENTION

The present invention relates to the field of public key cryptography, and more particularly to a method for securing against side-channel attacks any operation using a private key.

### BACKGROUND OF THE INVENTION

Cryptographic algorithms are commonly used for ensuring the privacy of communications by encryption, for authentication or for generating a verifiable signature. Examples of such algorithms are AES, DES or DSA.

Such cryptographic algorithms are sensitive to side-channel attacks (SCA), based on an analysis of the power consumption or electromagnetic signature of the device performing the encryption. Indeed SCA may be used to retrieve at least of a part of a secret private key d when used in a cryptographic operations as exponent of a modular exponentiation, or when used in the frame of an Elliptic curve cryptography (ECC) protocol, such as ECDSA, for deriving a new point of an elliptic curve by performing a scalar multiplication.

Efficient implementations of modular exponentiation or scalar multiplication have been proposed which process the secret key d bit by bit, such as double and add implementing ECC scalar multiplication, or square and multiply implementing modular exponentiation. Nevertheless, such implementations are sensitive to SCA because of their imbalance : processing a bit of the secret key d equal to zero does not induce performing the same operations than when the processed bit of the secret key is equal to one. Therefore, balanced methods have been proposed in which the same operations are performed when processing a bit of the secret key, whatever its value, such as Montgommery ladder. Such methods are less sensitive to SCA because of their balanced nature but the operations they perform remain the same when the same secret key is processed multiple times. Therefore, an attacker may gain knowledge about the secret key by monitoring repeated executions of such methods using each time the same secret key.

In order to overcome this drawback, blinding methods have been proposed, in which the secret key d is protected by masking it with a random value Rand, in a way enabling to perform a scalar multiplication or a modular exponentiation using the masked secret key instead of the secret key itself, and then to remove the masking from the result, in order to retrieve the correct result of the operation as if the secret key d itself had been used. For example, one blinding method developed for ECC protocols is addition by order in which the secret key d is masked into d' such that d' = d + Rand * N, with N the order which is a value essentially but not strictly equal to zero.

Nevertheless, existing blinding methods have several drawbacks. A first one is the high performance penalty incurred to cryptographic operations using blinding secret keys. In addition, methods based an order such as addition by order provide a blinding of bad quality because order value is usually sparse (it comprise long sequences of either only zeros or only ones). Order value being sparse induces that some parts of the secret key d to be blinded are in fact never blinded whatever the random value Rand used to perform the blinding.

As a result, there is a need for a method for protecting against side channel attacks secret keys used in modular exponentiation or scalar multiplication, with a lower impact on performances than existing blinding methods. Such a method shall be balanced without directly manipulating the secret key d and shall not be sensitive to the order value being sparse.

### SUMMARY OF THE INVENTION

For this purpose and according to a first aspect, this invention therefore relates to a method for securing against side channel attacks an execution of a cryptographic process comprising an elliptic curve scalar multiplication operation of a secret key d with a point G of an elliptic curve, d being a n-bit scalar, with n an integer, n>= 1,
said method being performed by a cryptographic device comprising at least a first accumulator and a second accumulator, and comprising:
- generating a masking value comprising n bits,
- additively masking said secret key d with said generated masking value Rand by adding said generated masking value Rand to said secret key d to obtain a masked key d',
- computing a result of said elliptic curve scalar multiplication operation by:
   ∘ storing the value 0 in a first accumulator,
   ∘ storing the point of the elliptic curve G in a second accumulator,
   ∘ for i an integer from 0 to n-1, wherein the 0^{th} bits of the masked key d' and of the masking value Rand are their most significant bits, and wherein j is the lowest integer bigger than i such that a pair of the j^{th} bits of the masked key d' and of the masking value Rand (dⱼ',Randⱼ) is neither equal to (0,0) nor equal to (1,1), storing intermediate values in said first accumulator and in said second accumulator at round i by:
      ∘ when a pair of the i^{th} bits of the masked key d' and of the masking value Rand (dᵢ',Randᵢ) is equal to (0,0) or (1,1), storing in the second accumulator a result of the addition of the content of the second accumulator and the content of the first accumulator and storing in the first accumulator a result of doubling the content of the first accumulator,
      ∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (0,1), storing in the first accumulator a result of the addition of the content of the first accumulator and the content of the second accumulator and storing in the second accumulator a result of doubling the content of the second accumulator,
      ∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (1,0), storing in the first accumulator a result of the addition of the content of the first accumulator and the content of the second accumulator and storing in the second accumulator a result of doubling the content of the second accumulator,
      ∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (0,1), storing in the first accumulator a result of the addition of the content of the first accumulator and the content of the second accumulator and storing in the second accumulator the result of doubling the value stored in the first accumulator at round i-1,
      ∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (1,0), storing in the first accumulator a result of the addition of the content of the first accumulator and the content of the second accumulator and storing in the second accumulator a result of doubling the value stored in the first accumulator at round i-1,
      ∘ when a pair of the (n-1)^{th} bits of the masked key d' and of the masking value Rand (dₙ₋₁',Randₙ₋₁) is equal to (0,1) or (1,0), storing in the first accumulator a result of the addition of the content of the first accumulator and the content of the second accumulator,
- retrieving the content of the first accumulator as the elliptic curve scalar multiplication operation result,
- performing said cryptographic algorithm using said elliptic curve scalar multiplication operation result.

For this purpose and according to a second aspect, this invention therefore relates to a method for securing against side channel attacks an execution of a cryptographic process comprising a modular exponentiation operation of a base g with a secret key d modulo a value P, d being a n-bit scalar, with n an integer, n>= 1, P being a positive integer number and g being a positive integer number less than P, said method being performed by a cryptographic device comprising at least a first accumulator and a second accumulator, and comprising:
- generating a masking value comprising n bits,
- additively masking said secret key d with said generated masking value Rand by adding said generated masking value Rand to said secret key d to obtain a masked key d',
- computing a result of said modular exponentiation operation by:
   ∘ storing the value g in a first accumulator,
   ∘ storing the value g² in a second accumulator,
   ∘ for i an integer from 0 to n-1, wherein the 0^{th} bits of the masked key d' and of the masking value Rand are their most significant bits, and wherein j is the lowest integer bigger than i such that a pair of the j^{th} bits of the masked key d' and of the masking value Rand (dⱼ',Randⱼ) is neither equal to (0,0) nor equal to (1,1), storing intermediate values in said first accumulator and in said second accumulator at round i by:
      ∘ when a pair of the i^{th} bits of the masked key d' and of the masking value Rand (dᵢ',Randᵢ) is equal to (0,0) or (1,1), storing in the second accumulator a result of the multiplication modulo P of the content of the second accumulator and the content of the first accumulator and storing in the first accumulator a result of squaring modulo P the content of the first accumulator modulo P,
      ∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (0,1), storing in the first accumulator a result of the multiplication modulo P of the content of the first accumulator and the content of the second accumulator and storing in the second accumulator a result of squaring modulo P the content of the second accumulator, ∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (1,0), storing in the first accumulator a result of the multiplication modulo P of the content of the first accumulator and the content of the second accumulator and storing in the second accumulator a result of squaring modulo P the content of the second accumulator, ∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (0,1), storing in the first accumulator a result of the multiplication modulo P of the content of the first accumulator and the content of the second accumulator and storing in the second accumulator the result of squaring modulo P the value stored in the first accumulator at round i-1,
      ∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (1,0), storing in the first accumulator a result of the multiplication modulo P of the content of the first accumulator and the content of the second accumulator and storing in the second accumulator a result of squaring modulo P the value stored in the first accumulator at round i-1,
      ∘ when a pair of the (n-1)^{th} bits of the masked key d' and of the masking value Rand (dₙ₋₁',Randₙ₋₁) is equal to (0,1) or (1,0), storing in the first accumulator a result of the multiplication modulo P of the content of the first accumulator and the content of the second accumulator,
- retrieving the content of the first accumulator as the modular exponentiation operation result,
- performing said cryptographic algorithm using said elliptic curve scalar multiplication operation result.

Such methods enable to perform an execution which is secured against side channel attacks of a cryptographic process comprising either a modular exponentiation or a scalar multiplication, without any direct manipulation of the secret key, and without the performance penalty and order issues associated to blinding by order, despite actually blinding the secret key

The size of the masking value may be 256 bits, 512 bits, 1024 bits or 2048 bits depending on the secret key size.

According to a third aspect, this invention therefore relates also to a computer program product directly loadable into the memory of at least one computer, comprising software code instructions for performing the steps of the methods according to the first aspect and the second aspect when said product is run on the computer.

According to a fourth aspect, this invention therefore relates also to a non-transitory computer readable medium storing executable computer code that when executed by a cryptographic device comprising a processing system having at least one hardware processor performs the steps of the methods according to the first aspect and the second aspect.

According to a fifth aspect, this invention therefore relates also to a cryptographic device comprising:
- at least one first accumulator and a second accumulator,
- a processor configured to execute the steps of the method according to the first aspect and the second aspect.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a cryptographic device according to an embodiment of the present invention;
- Figure 2 illustrates schematically methods according to an embodiment of the present invention.

### DETAILED DESCRIPTION OF EMBODIMENTS OF THE INVENTION

The invention aims at securing against side channel attacks an execution of a cryptographic process comprising an operation using a private key such as a modular exponentiation or a scalar multiplication in an elliptic curve cryptographic process.

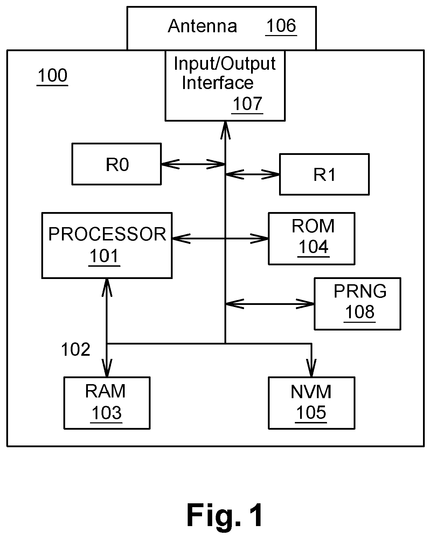

Such a process may be performed by a cryptographic device 100 a schematic illustration of which is given on **Figure 1****.** The cryptographic device 100 may include a processor 101 connected via a bus 102 to a random access memory (RAM) 103, a read-only memory (ROM) 104, and/or a non-volatile memory (NVM) 105. The cryptographic device 100 may further include a communication interface 106 by which the cryptographic device 100 may be connected to a network. Such an interface may be a wireless interface connected to an antenna and may be used to connect the cryptographic device 100 to various forms of wireless networks, e.g., wide-area networks, WiFi networks, or mobile telephony networks. Alternatively, such an interface may be a wired interface such as an Ethernet internet. The cryptographic device 100 may also include input/output means 107 providing interfaces to the user of the cryptographic device 100, such as one or more screens, loudspeakers, a mouse, tactile surfaces, a keyboard etc... The cryptographic device 100 also comprises at least a first accumulator R0 and a second accumulator R1 to be used by the cryptographic device to store calculation intermediate results.

Such a cryptographic device may for example be a smartcard, a mobile telephone, a tablet, or a personal computer. It may also be a smartchip embedded in an identity document such as a passport, or a Hardware Security Module (HSM).

The cryptographic process performed by the cryptographic device may for example be an elliptic curve cryptography (ECC) process such as ECDSA protocol, or another cryptographic process such as RSA encryption or Diffie-Hellman key exchange.

All these cryptographic processes comprise a step of using a secret value d, hereafter called secret key, for computing a result r of a modular exponentiation which raises a base b to the power d modulo some value m: r= b^{d} |m, or in the case of an ECC process, for deriving a new point Q of an elliptic curve by performing an elliptic curve scalar multiplication operation of the secret key d with a point G of the elliptic curve: Q = *d* * *G.* In the rest of the description, the secret key d is supposed to be a n-bit scalar, with n an integer, n>= 1. For example, n=32, 64, 256, 512, 1024 or 2048 bits.

In order to protect the execution of the modular exponentiation or the scalar multiplication of such a process against side-channel analysis, the secret key d is masked using a random masking value Rand, of the same size than the secret key. In order to avoid the drawbacks of blinding methods such as addition by order, a first idea of the invention is to directly mask the secret key by adding to it the random masking value, without using any order value: d' = d + Rand with d' the masked secret key.

In order to have an efficient implementation of the modular exponentiation or the scalar multiplication and to further protect it against side-channel analysis, it is interesting, as presented above, to use a balanced version of an algorithm processing the secret key bit by bit, such as Montgomery ladder. Such a balanced algorithm, when processing a given bit of the secret key, updates the first and second accumulators depending on the value of the processed bit, such that the same operations are performed at each bit processing either on the first or second accumulator and such that after the last bit of the secret key has been processed, the sought result is stored in one of the accumulators.

As an example, when computing a scalar multiplication Q = *d* _{*} G between the secret key d and a point G of an elliptic curve, in the unbalanced Double and Add algorithm, only one accumulator is used. When the bit dᵢ of the secret key being processed is zero, the content of the accumulator is only doubled. When dᵢ is equal to one, the content of the accumulator is doubled and one G is added to it. In Montgomery Ladder algorithm, two accumulators R0 and R1 are needed. When dᵢ is zero, the content of R0 is added to the content of R1 (R1 =R1 +R0), and the content of R0 is doubled. When dᵢ is equal to one, it is the opposite: the content of R1 is added to the content of R0 (R0=R1+R0), and the content of R1 is doubled.

In order to use a masked secret key with a balanced modular exponentiation or scalar multiplication, one could compute a masked modular exponentiation or scalar multiplication result by applying such a balanced algorithm using the masked secret key d', for example computing : r'= b^{d'} |m (with | the concatenation operator) or Q' = *d'* * *G,* and then unmask the result in order to get the sought modular exponentiation or scalar multiplication result which would have been obtained by applying such a balanced algorithm using the secret key d. In order to avoid the large cost increase of such an approach, a second main idea of the invention is, when processing a given bit of the masked secret key d', to look at the corresponding bit of the random value rand and to deduce the operations to be applied to the first and second accumulators in order to directly get in one of the accumulators, after the last bit of the secret key has been processed, the result which would have been obtained by applying such a balanced algorithm using the secret key d.

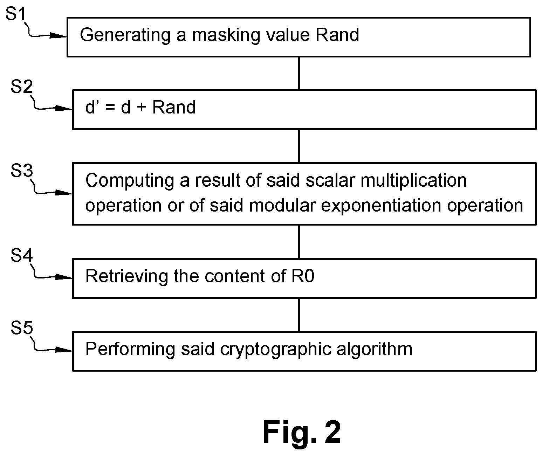

The following paragraphs describe with more details the steps of methods according to the invention securely computing a modular exponentiation or an ECC scalar multiplication as depicted on **Figure 2****.**

In a first step S1, the cryptographic device generates a masking value Rand, to be used for performing the next modular exponentiation or scalar multiplication, and comprising n bits, like the secret key d. Such a value may be randomly generated, for example by a Pseudo-Random Number Generator PRNG 108 included in the cryptographic device.

In a second step S2, the cryptographic device performs an additive masking of the secret key d with the generated masking value Rand by adding the generated masking value Rand to the secret key d to obtain a masked key d' : d' = d + Rand. In the following steps, the bits of the masked key d' and the masking value Rand are indexed from 0 to n-1 from left to right. Said differently, their bits with index 0 (0^{th} bits) are their most significant bits. Since the masking value Rand has to same size as the secret key d, the size of the masked key is at most n+1. It induces a much lower performance penalty than existing blinding methods such as addition by order in which the masked key is much longer.

In a third step S3, the cryptographic device computes the result of the modular exponentiation or scalar multiplication to be computed.

In the following paragraphs, the third step S3 is first described in the case of computing a scalar exponentiation Q = *d * G* between the secret key d and a point G of an elliptic curve, using a modified version of Double and Add algorithm. The third step S3 is then described in the case of computing a modular exponentiation by replacing any point addition by a modular multiplication and any point doubling by a modular square operation.

The cryptographic device first initializes the first accumulator R0 and the second accumulator R1. Then, for i an integer from 0 to n-1, the 0^{th} bits of the masked key d' and of the masking value Rand being their most significant bits, and j being the lowest integer bigger than i such that a pair of the j^{th} bits of the masked key d' and of the masking value Rand (dⱼ',Randⱼ) is neither equal to (0,0) nor equal to (1,1), the cryptographic device stores intermediate values in the first accumulator R0 and in the second accumulator R1 at round i, these intermediate values being obtained by performing operations on the content of the second accumulator R1 and/or the content of the first accumulator R0. These operations are selected among addition, multiplication, squaring and doubling, depending on the values of the pair of the i^{th} bits of the masked key d' and of the masking value Rand (dᵢ',Randᵢ) and on the pair of the j^{th} bits of the masked key d' and of the masking value Rand (dⱼ',Randⱼ).

In the case of computing a scalar exponentiation, at the beginning of the third step, the cryptographic device initializes its accumulators by setting the first accumulator R0 to zero (R0₋₁=0), and by storing the elliptic curve point G in the second accumulator R1 (R1₋₁=G).

As in balanced scalar multiplication algorithms such as Montgommery Ladder, the cryptographic device will then process each bit of the masked key d' one by one and at each round, corresponding to one bit of the secret key, it will update both accumulators such that one doubling and one addition are performed, and such that the first accumulator R0 stores, at the end of the last round, the result Q *= d* * *G.* In the following paragraphs, R0ᵢ and R1ᵢ are the contents of the first and second accumulators at the end of round i.

The third step S3 then comprises the following operations to be performed at each round i corresponding to the processing of a bit dᵢ of the masked key d', for i an integer from 0 to n-1. In these operations, since d' = d + Rand which can be rewritten as d = d' - Rand, an equivalent value of dᵢ can be inferred from the values of dᵢ' and Randᵢ.

When the pair of the i^{th} bits of the masked key d' and of the masking value Rand (dᵢ',Randᵢ) is equal to (0,0) or (1,1), it is equivalent to reading dᵢ = 0. Therefore, the cryptographic device stores in the first accumulator R0 the result of doubling the content of the first accumulator R0 : R0ᵢ = 2*R0ᵢ₋₁. As will be shown above, depending on the operation performed at the previous round, the content of the second accumulator R1i-1 may be equal to R0ᵢ-1+G or R0ᵢ-1-G. In order to keep it that way, the cryptographic device, before doubling the second accumulator R0, stores in the second accumulator R1 the result of the addition of the content of the second accumulator R1 and the content of the first accumulator R0: R1ᵢ = R0ᵢ₋₁ + R1ᵢ₋₁. = 2 R0ᵢ₋₁ +/- G = R0ᵢ +/- G.

When the pair of the i^{th} bits of the masked key d' and of the masking value Rand (dᵢ',Randᵢ) is equal to (1,0), it is equivalent to reading dᵢ = 1. In such a case, the content of the first accumulator should be doubled and +1G shall be added to it. This can be achieved by setting the second accumulator R1 to R0+G before adding it to the first accumulator: R0i = R0ᵢ₋₁ + R1ᵢ₋₁.

On the other hand, when the pair of the i^{th} bits of the masked key d' and of the masking value Rand (dᵢ',Randᵢ) is equal to (0,1), it is equivalent to reading dᵢ = -1. In such a case, the content of the first accumulator should be doubled and -1G shall be added to it. This can be achieved by setting the second accumulator R1 to R0-G before adding it to the first accumulator: R0ᵢ = R0ᵢ₋₁ + R1ᵢ₋₁.

Since the operations performed when (dᵢ',Randᵢ) is equal to (0,0) or (1,1) do not change the relationship between R0i-1 and R1i-1, the method according to the invention sets R1 to R0+G or R0-G for the beginning of a given round at the previous round where the pair of bits of the masked key d' and of the masking value Rand is equal to either (0,1) or (1,0). The relationship to be set between R1 and R0 is selected by looking at the next pair of bits of the masked key d' and of the masking value Rand that is equal to either (0,1) or (1,0). At round i, for i=0 to n-2, such a next pair is called the pair of the j^{th} bits of the masked key d' and of the masking value Rand (dⱼ',Randⱼ) with j is the lowest integer bigger than i such that this pair of the j^{th} bits of the masked key d' and of the masking value Rand (dⱼ',Randⱼ) is neither equal to (0,0) nor equal to (1,1).

When (dⱼ',Randⱼ) = (dᵢ',Randᵢ), both being either equal to (1,0) or (0,1), it means that the relation between R0ᵢ₋₁ and R1ᵢ₋₁ (either R1ᵢ₋₁=R0ᵢ₋₁+G or R1ᵢ₋₁=R0ᵢ₋₁-G) used to compute R0ᵢ (R0ᵢ = R0ᵢ₋₁ + R1ᵢ₋₁) shall be kept intact between R0ᵢ and R1ᵢ for correctly setting R0ⱼ at round j. Therefore, in such a case, at round i, for i=0 to n-2, the content of the second accumulator is just doubled: R1ᵢ = 2*R1ᵢ₋₁. Indeed, by doing so, when R1ᵢ₋₁=R0ᵢ₋₁+G, R1ᵢ=2*(R0ᵢ₋₁+G)= R0ᵢ+G since R0ᵢ = R0ᵢ₋₁ + R1ᵢ₋₁ = 2 R0ᵢ₋₁+G. Similarly, when R1ᵢ₋₁=R0ᵢ₋₁-G, R1ᵢ=2*(R0ᵢ₋₁-G)= R0ᵢ-G since R0ᵢ = R0ᵢ₋₁ + R1ᵢ₋₁= 2 R0ᵢ-1-G.

On the contrary, when (dⱼ',Randⱼ) = (0,1) and (dᵢ',Randᵢ)=(1,0) ; or when (dⱼ',Randⱼ) = (1,0) and (dᵢ',Randᵢ)=(0,1), it means that the relation between R0ᵢ₋₁ and R1ᵢ₋₁ (either R1ᵢ₋₁=R0ᵢ₋₁+G or R1ᵢ₋₁=R0ᵢ₋₁-G) used to compute R0ᵢ (R0ᵢ = R0ᵢ₋₁ + R1ᵢ₋₁) shall be reversed between R0ᵢ and R1ᵢ for correctly setting R0ⱼ at round j. Therefore, in such a case, at round i, for i=0 to n-2, the cryptographic device stores in the second accumulator R1 the result of doubling the value stored in the first accumulator R0 at round i-1: R1ᵢ = 2*R0ᵢ₋₁. indeed, by doing so, when R1ᵢ₋₁=R0ᵢ₋₁ +G, R1ᵢ= R0ᵢ-G since R0ᵢ = R0ᵢ₋₁ + R1ᵢ₋₁= 2 R0ᵢ₋₁+G. Similarly, when R1ᵢ₋₁=R0ᵢ₋₁-G, R1ᵢ=R0ᵢ+G since R0ᵢ = R0ᵢ₋₁ + R1ᵢ₋₁= 2 R0ᵢ-1-G.

In the case of the last round, when i=n-1, there is no need to take into account what the relationship between R0 and R1 should be for a next round. At that last round, only the updating of the first accumulator R0 should be performed has described above for the other rounds in order to get the result of the operation in the first accumulator. Updating of the second accumulator R1 is not needed since its content is not used anymore for the remaining steps of the process.

To summarize:
∘ when the pair of the i^{th} bits of the masked key d' and of the masking value Rand (dᵢ',Randᵢ) is equal to (0,1) and the pair of the j^{th} bits of the masked key d' and of the masking value Rand (dⱼ',Randⱼ) is equal to (0,1), the cryptographic device stores in the first accumulator R0 the result of the addition of the content of the first accumulator R0 and the content of the second accumulator R1 and it stores in the second accumulator R1 the result of doubling the content of the second accumulator R1,
∘ when the pair of the i^{th} bits of the masked key d' and of the masking value Rand (dᵢ',Randᵢ) is equal to (1,0) and the pair of the j^{th} bits of the masked key d' and of the masking value Rand (dⱼ',Randⱼ) is equal to (1,0), the cryptographic device stores in the first accumulator R0 the result of the addition of the content of the first accumulator R0 and the content of the second accumulator R1 and it stores in the second accumulator R1 the result of doubling the content of the second accumulator R1,
∘ when the pair of the i^{th} bits of the masked key d' and of the masking value Rand (dᵢ',Randᵢ) is equal to (1,0) and the pair of the j^{th} bits of the masked key d' and of the masking value Rand (dⱼ', Randⱼ) is equal to (0,1), the cryptographic device stores in the first accumulator R0 the result of the addition of the content of the first accumulator R0 and the content of the second accumulator R1 and it stores in the second accumulator R1 the result of doubling the value stored in the first accumulator R0 at round i-1,
∘ when the pair of the i^{th} bits of the masked key d' and of the masking value Rand (dᵢ',Randᵢ) is equal to (0,1) and the pair of the j^{th} bits of the masked key d' and of the masking value Rand (dⱼ',Randⱼ) is equal to (1,0), the cryptographic device stores in the first accumulator R0 the result of the addition of the content of the first accumulator R0 and the content of the second accumulator R1 and it stores in the second accumulator R1 the result of doubling the value stored in the first accumulator R0 at round i-1,
∘ when a pair of the (n-1)^{th} bits of the masked key d' and of the masking value Rand (dₙ₋₁',Randₙ₋₁) is equal to (0,1) or (1,0), storing in the first accumulator a result of the addition of the content of the first accumulator and the content of the second accumulator.

In the case of a modular exponentiation operation of a base g with a secret key d modulo a value P, d being a n-bit scalar, with n an integer, n>= 1, P being a positive integer number and g being a positive integer number less than P, RAND should be selected such that the first pair of the masked key d' and of the masking value Rand (d₀',Rand₀) should be equal to (1,0) and the pair of the j^{th} bits of the masked key d' and of the masking value Rand (dⱼ',Randⱼ) should be equal to (1,0). Then, the cryptographic device initializes its accumulators by setting the first accumulator R0 to the base g (R0₋₁=g), and by storing the square of the base g in the second accumulator R1 (R1₋₁=g²). Then for the other pairs of the bits of the masked key d' and of the masking value Rand (dᵢ',Randᵢ):
∘ when the pair of the i^{th} bits of the masked key d' and of the masking value Rand (dᵢ',Randᵢ) is equal to (0,0) or (1,1), the cryptographic devices stores in the second accumulator (R1) a result of the multiplication modulo P of the content of the second accumulator (R1) and the content of the first accumulator (R0) and the cryptographic device stores in the first accumulator (R0) a result of squaring modulo P the content of the first accumulator (R0) modulo P,
∘ when the pair of the i^{th} bits of the masked key d' and of the masking value Rand (dᵢ',Randᵢ) is equal to (0,1) and the pair of the j^{th} bits of the masked key d' and of the masking value Rand (dⱼ',Randⱼ) is equal to (0,1), the cryptographic device stores in the first accumulator (R0) a result of the multiplication modulo P of the content of the first accumulator (R0) and the content of the second accumulator (R1) and the cryptographic device stores in the second accumulator (R1) a result of squaring modulo P the content of the second accumulator (R1),
∘ when the pair of the i^{th} bits of the masked key d' and of the masking value Rand (dᵢ',Randᵢ) is equal to (1,0) and the pair of the j^{th} bits of the masked key d' and of the masking value Rand (dⱼ',Randⱼ) is equal to (1,0), the cryptographic device stores in the first accumulator (R0) a result of the multiplication modulo P of the content of the first accumulator (R0) and the content of the second accumulator (R1) and the cryptographic device stores in the second accumulator (R1) a result of squaring modulo P the content of the second accumulator (R1),
∘ when the pair of the i^{th} bits of the masked key d' and of the masking value Rand (dᵢ',Randᵢ) is equal to (1,0) and the pair of the j^{th} bits of the masked key d' and of the masking value Rand (dⱼ',Randⱼ) is equal to (0,1), the cryptographic device stores in the first accumulator (R0) a result of the multiplication modulo P of the content of the first accumulator (R0) and the content of the second accumulator (R1) and the cryptographic device stores in the second accumulator (R1) the result of squaring modulo P the value stored in the first accumulator (R0) at round i-1,
∘ when the pair of the i^{th} bits of the masked key d' and of the masking value Rand (dᵢ',Randᵢ) is equal to (0,1) and the pair of the j^{th} bits of the masked key d' and of the masking value Rand (dⱼ',Randⱼ) is equal to (1,0), the cryptographic device stores in the first accumulator (R0) a result of the multiplication modulo P of the content of the first accumulator (R0) and the content of the second accumulator (R1) and the cryptographic device stores in the second accumulator (R1) a result of squaring modulo P the value stored in the first accumulator (R0) at round i-1,
∘ when the pair of the (n-1)^{th} bits of the masked key d' and of the masking value Rand (dₙ₋₁',Randₙ₋₁) is equal to (0,1) or (1,0), the cryptographic device stores in the first accumulator a result of the multiplication modulo P of the content of the first accumulator and the content of the second accumulator,

In a fourth step S4, the cryptographic device retrieves the content of the first accumulator R0 as the elliptic curve scalar multiplication operation result or modular exponentiation result.

Such a method requires that (d₀',Rand₀) = (1,0) and that for round 0 (dⱼ',Randⱼ)=(1,0). When this condition is not met at the end of the second step S2, the cryptographic device can execute again the first and second steps S1, S2 until the condition is satisfied.

An example of elliptic curve scalar multiplication operation is given where

| | |
|---|---|
| d = 41 = | 101001 (binary) |
| RAND = 10 = | 001010 (binary) |
| Hence, d' = 51 = | 110011 (binary) (from regular addition d' = d + RAND). |

At round 0 : (d₀',Rand₀) = (1,0), and (dⱼ',Randⱼ) = (1,0),
Then, RO₀ = R0₋₁ + R1₋₁ = G
R1₀ = 2* R1₋₁ =2G
At round 1 : (d₁',Rand₁)= (1,0), (dⱼ',Randⱼ) = (0,1),
Then R0₁ = R0₀ + R1₀ = 3G
R1₁ = 2* R0₀=2G
At round 2 : (d₂',Rand₂)= (0,1), (dⱼ',Randⱼ) = (1,0),
Then R0₂ = R0₁ + R1₁ = 5G
R1₂ = 2* R0₁=6G
At round 3 : (d₃',Rand₃)= (0,0),
Then R0₃ = 2R0₂=10G
R1₃ = R0₂ + R1₂ = 11G
At round 4 : (d₄',Rand₄) = (1,1),
Then R0₄ = 2R0₃=20G
R1₄ = R0₃ + R1₃ = 21G

At the last round, round 5, (d₅',Rand₅) = (1,0), and only the update of the first accumulator matters:
Then R0₅ = R0₄ + R1₄ = 41G, which is the result of the scalar multiplication Q=d x G.

An example of modular exponentiation is given where :

| | |
|---|---|
| d = 137 = | 10001001 (binary) |
| RAND = 74 = | 01001010 (binary) |
| Hence, d' = 211 = | 11010011 (binary) (from regular addition d' = d + RAND). |

At round 0 : (d₀',Rand₀) = (1,0), and (dⱼ',Randⱼ) = (1,0),
Initialization is performed :
   R0₀ = g
   R1₀ = g²
At round 1 : (d₁',Rand₁)= (1,1), (dⱼ',Randⱼ) = (1,0),
Then R0₁ = R0₀² = g²
R1₁ = R0₀ * R1₀ =g³
At round 2 : (d₂',Rand₂)= (0,0), (dⱼ',Randⱼ) = (1,0),
Then R0₂ = R0₁² = g⁴
R1₂ = R0₁ * R1₁ =g⁵
At round 3 : (d₃',Rand₃)= (1,0), (dⱼ',Randⱼ) = (0,1),
Then R0₃ = R0₂* R1₂ =g⁹
R1₃ = R0₂² = g⁸
At round 4 : (d₄',Rand₄) = (0,1), (dⱼ',Randⱼ) = (1,0),
Then R0₄ = R0₃* R13 =g¹⁷
R1₄ = R0₃² = g¹⁸
At round 5 : (d₅',Rand₅) = (0,0), (dⱼ',Randⱼ) = (1,0),
Then R0₅ = R0₄² = g³⁴
R1₅ = R0₄ * R1₄ =g³⁵
At round 6 : (d₆',Rand₆) = (1,1), (dⱼ',Randⱼ) = (1,0),
Then R0₆ = R0₅² = g⁶⁸
R1₆ = R0₅ * R1₅ =g⁶⁹

At the last round, round 7, (d₅',Rand₅) = (1,0), and only the update of the first accumulator matters:
Then R0₇ = R0₆ * R1₆ = g¹³⁷, which is the result of the modular exponentiation.

In a fifth step S5, the cryptographic device performs said cryptographic algorithm using said elliptic curve scalar multiplication operation result or modular exponentiation result.

According to a second aspect, this invention therefore relates also to a computer program product directly loadable into the memory of at least one computer, comprising software code instructions for performing the steps of the methods described here above when said product is run on the computer.

According to a third aspect, this invention therefore relates also to a non-transitory computer readable medium storing executable computer code that when executed by a cryptographic device comprising a processing system having at least one hardware processor performs the steps of the methods described here above.

According to a fourth aspect, this invention therefore relates also to a cryptographic device described here above comprising :
- at least one first accumulator R0 and a second accumulator R1,
- at least one processor 101 configured to execute the steps of the methods described here above.

As a result, the methods described above enable to perform an execution which is secured against side channel attacks of a cryptographic process comprising either a modular exponentiation or a scalar multiplication, without any direct manipulation of the secret key, and without the performance penalty and order issues associated to blinding by order, despite actually blinding the secret key.

## Claims

1. A method for securing against side channel attacks an execution of a cryptographic process comprising an elliptic curve scalar multiplication operation of a secret key d with a point G of an elliptic curve, d being a n-bit scalar, with n an integer, n>= 1,
said method being performed by a cryptographic device (100) comprising at least a first accumulator (R0) and a second accumulator (R1), and comprising:
- generating (S1) a masking value Rand comprising n bits,
- additively masking (S2) said secret key d with said generated masking value Rand by adding said generated masking value Rand to said secret key d to obtain a masked key d',
- computing (S3) a result of said elliptic curve scalar multiplication operation by:
∘ storing the value 0 in a first accumulator (R0),
∘ storing the point of the elliptic curve G in a second accumulator (R1),
∘ for i an integer from 0 to n-1, wherein the 0^{th} bits of the masked key d' and of the masking value Rand are their most significant bits, and wherein j is the lowest integer bigger than i such that a pair of the j^{th} bits of the masked key d' and of the masking value Rand (dⱼ',Randⱼ) is neither equal to (0,0) nor equal to (1,1), storing intermediate values in said first accumulator (R0) and in said second accumulator (R1) at round i by:
∘ when a pair of the i^{th} bits of the masked key d' and of the masking value Rand (dᵢ',Randᵢ) is equal to (0,0) or (1,1), storing in the second accumulator (R1) a result of the addition of the content of the second accumulator (R1) and the content of the first accumulator (R0) and storing in the first accumulator (R0) a result of doubling the content of the first accumulator (R0),
∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (0,1), storing in the first accumulator (R0) a result of the addition of the content of the first accumulator (R0) and the content of the second accumulator (R1) and storing in the second accumulator (R1) a result of doubling the content of the second accumulator (R1),
∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (1,0), storing in the first accumulator (R0) a result of the addition of the content of the first accumulator (R0) and the content of the second accumulator (R1) and storing in the second accumulator (R1) a result of doubling the content of the second accumulator (R1),
∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (0,1), storing in the first accumulator (R0) a result of the addition of the content of the first accumulator (R0) and the content of the second accumulator (R1) and storing in the second accumulator (R1) the result of doubling the value stored in the first accumulator (R0) at round i-1,
∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (1,0), storing in the first accumulator (R0) a result of the addition of the content of the first accumulator (R0) and the content of the second accumulator (R1) and storing in the second accumulator (R1) a result of doubling the value stored in the first accumulator (R0) at round i-1,
∘ when a pair of the (n-1)^{th} bits of the masked key d' and of the masking value Rand (dₙ₋₁',Randₙ₋₁) is equal to (0,1) or (1,0), storing in the first accumulator a result of the addition of the content of the first accumulator and the content of the second accumulator,
- retrieving (S4) the content of the first accumulator (R0) as the elliptic curve scalar multiplication operation result,
- performing (S5) said cryptographic algorithm using said elliptic curve scalar multiplication operation result.

2. A method for securing against side channel attacks an execution of a cryptographic process comprising a modular exponentiation operation of a base g with a secret key d modulo a value P, d being a n-bit scalar, with n an integer, n>= 1, P being a positive integer number and g being a positive integer number less than P,
said method being performed by a cryptographic device (100) comprising at least a first accumulator (R0) and a second accumulator (R1), and comprising:
- generating (S1) a masking value Rand comprising n bits,
- additively masking (S2) said secret key d with said generated masking value Rand by adding said generated masking value Rand to said secret key d to obtain a masked key d',
- computing (S3) a result of said modular exponentiation operation by:
∘ storing the value g in a first accumulator (R0),
∘ storing the value g² in a second accumulator (R1),
∘ for i an integer from 0 to n-1, wherein the 0^{th} bits of the masked key d' and of the masking value Rand are their most significant bits, and wherein j is the lowest integer bigger than i such that a pair of the j^{th} bits of the masked key d' and of the masking value Rand (dⱼ',Randⱼ) is neither equal to (0,0) nor equal to (1,1), storing intermediate values in said first accumulator (R0) and in said second accumulator (R1) at round i by:
∘ when a pair of the i^{th} bits of the masked key d' and of the masking value Rand (dᵢ',Randᵢ) is equal to (0,0) or (1,1), storing in the second accumulator (R1) a result of the multiplication modulo P of the content of the second accumulator (R1) and the content of the first accumulator (R0) and storing in the first accumulator (R0) a result of squaring modulo P the content of the first accumulator (R0) modulo P,
∘ when a pair of the i^{th} bits of the masked key d' and of the masking value Rand (dᵢ',Randᵢ) is equal to (0,1) and a pair of the j^{th} bits of the masked key d' and of the masking value Rand (dⱼ',Randⱼ) is equal to (0,1), storing in the first accumulator (R0) a result of the multiplication modulo P of the content of the first accumulator (R0) and the content of the second accumulator (R1) and storing in the second accumulator (R1) a result of squaring modulo P the content of the second accumulator (R1),
∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (1,0), storing in the first accumulator (R0) a result of the multiplication modulo P of the content of the first accumulator (R0) and the content of the second accumulator (R1) and storing in the second accumulator (R1) a result of squaring modulo P the content of the second accumulator (R1),
∘ when a pair of the i^{th} bits of the masked key d' and of the masking value Rand (dᵢ',Randᵢ) is equal to (1,0) and a pair of the j^{th} bits of the masked key d' and of the masking value Rand (dⱼ',Randⱼ) is equal to (0,1), storing in the first accumulator (R0) a result of the multiplication modulo P of the content of the first accumulator (R0) and the content of the second accumulator (R1) and storing in the second accumulator (R1) the result of squaring modulo P the value stored in the first accumulator (R0) at round i-1,
∘ when a pair of the i^{th} bits of the masked key d' and of the masking value Rand (dᵢ', Randᵢ) is equal to (0,1) and a pair of the j^{th} bits of the masked key d' and of the masking value Rand (dⱼ',Randⱼ) is equal to (1,0), storing in the first accumulator (R0) a result of the multiplication modulo P of the content of the first accumulator (R0) and the content of the second accumulator (R1) and storing in the second accumulator (R1) a result of squaring modulo P the value stored in the first accumulator (R0) at round i-1,
∘ when a pair of the (n-1)^{th} bits of the masked key d' and of the masking value Rand (dₙ₋₁',Randₙ₋₁) is equal to (0,1) or (1,0), storing in the first accumulator a result of the multiplication modulo P of the content of the first accumulator and the content of the second accumulator,
- retrieving (S4) the content of the first accumulator (R0) as the modular exponentiation operation result,
- performing (S5) said cryptographic algorithm using said elliptic curve scalar multiplication operation result.

3. The method of claim 1 or 2, wherein the size of the masking value (Rand) is 256, 512, 1024 or 2048 bits depending on the secret key size.

4. A computer program product directly loadable into the memory of at least one computer, comprising software code instructions for performing the steps of any of claims 1 to 3, when said product is run on the computer.

5. A non-transitory computer readable medium storing executable computer code that when executed by a cryptographic device (100) comprising a processing system having at least one hardware processor performs the steps of any of claims 1 to 3.

6. Cryptographic device (100) comprising :
- a processor (101) configured to execute the steps of any of claims 1 to 3,
- at least one first accumulator (R0) and a second accumulator (R1).

## Patentansprüche

1. Verfahren zum Sichern gegen Seitenkanalangriffe einer Ausführung eines kryptographischen Prozesses, umfassend eine Skalarmultiplikationsoperation einer elliptische Kurve eines geheimen Schlüssels d mit einem Punkt G einer elliptischen Kurve, wobei d ein n-Bit-Skalar ist, mit n einer ganzen Zahl, n>= 1,
wobei das Verfahren durch eine kryptographische Vorrichtung (100) durchgeführt wird, umfassend mindestens einen ersten Akkumulator (R0) und einen zweiten Akkumulator (R1), und umfassend:
- Erzeugen (S1) eines Maskierungswerts Rand, umfassend n Bits,
- additives Maskieren (S2) des geheimen Schlüssels d mit dem erzeugten Maskierungswert Rand durch Addieren des erzeugten Maskierungswerts Rand zu dem geheimen Schlüssel d, um einen maskierten Schlüssel d' zu erhalten,
- Berechnen (S3) eines Ergebnisses der Skalarmultiplikationsoperation der elliptischen Kurve durch:
∘ Speichern des Werts 0 in einem ersten Akkumulator (R0),
∘ Speichern des Punkts der elliptischen Kurve G in einem zweiten Akkumulator (R1),
∘ für i eine ganze Zahl von 0 bis n-1, wobei die 0-ten Bits des maskierten Schlüssels d' und des Maskierungswerts Rand ihre höchstwertigen Bits sind, und wobei j die niedrigste ganze Zahl größer als i derart ist, dass ein Paar der j-ten Bits des maskierten Schlüssels d' und des Maskierungswerts Rand (dⱼ',Randⱼ) weder gleich (0,0) noch gleich (1,1) ist, Speichern von Zwischenwerten in dem ersten Akkumulator (R0) und in dem zweiten Akkumulator (R1) in Runde i durch:
∘ wenn ein Paar der i-ten Bits des maskierten Schlüssels d' und des Maskierungswerts Rand (dᵢ',Randᵢ) gleich (0,0) oder (1,1) ist, Speichern in dem zweiten Akkumulator (R1) eines Ergebnisses der Addition des Inhalts des zweiten Akkumulators (R1) und des Inhalts des ersten Akkumulators (R0) und Speichern in dem ersten Akkumulator (R0) eines Ergebnisses einer Verdopplung des Inhalts des ersten Akkumulators (R0),
∘ wenn ein Paar der i-ten Bits des maskierten Schlüssels d' und des Maskierungswerts Rand (dᵢ',Randᵢ) gleich (0,1) ist und ein Paar der j-ten Bits des maskierten Schlüssels d' und des Maskierungswerts Rand (dⱼ',Randⱼ) gleich (0,1) ist, Speichern in dem ersten Akkumulator (R0) eines Ergebnisses der Addition des Inhalts des ersten Akkumulators (R0) und des Inhalts des zweiten Akkumulators (R1) und Speichern in dem zweiten Akkumulator (R1) eines Ergebnisses der Verdopplung des Inhalts des zweiten Akkumulators (R1),
∘ wenn ein Paar der i-ten Bits des maskierten Schlüssels d' und des Maskierungswerts Rand (dᵢ',Randᵢ) gleich (1,0) ist und ein Paar der j-ten Bits des maskierten Schlüssels d' und des Maskierungswerts Rand (dⱼ',Randⱼ) gleich (1,0) ist, Speichern in dem ersten Akkumulator (R0) eines Ergebnisses der Addition des Inhalts des ersten Akkumulators (R0) und des Inhalts des zweiten Akkumulators (R1) und Speichern in dem zweiten Akkumulator (R1) eines Ergebnisses der Verdopplung des Inhalts des zweiten Akkumulators (R1),
∘ wenn ein Paar der i-ten Bits des maskierten Schlüssels d' und des Maskierungswerts Rand (dᵢ',Randᵢ) gleich (1,0) ist und ein Paar der j-ten Bits des maskierten Schlüssels d' und des Maskierungswerts Rand (dⱼ',Randⱼ) gleich (0,1) ist, Speichern in dem ersten Akkumulator (R0) eines Ergebnisses der Addition des Inhalts des ersten Akkumulators (R0) und des Inhalts des zweiten Akkumulators (R1) und Speichern in dem zweiten Akkumulator (R1) des Ergebnisses der Verdopplung des Werts, der in dem ersten Akkumulator (R0) in Runde i-1 gespeichert wird,
∘ wenn ein Paar der i-ten Bits des maskierten Schlüssels d' und des Maskierungswerts Rand (dᵢ',Randᵢ) gleich (0,1) ist und ein Paar der j-ten Bits des maskierten Schlüssels d' und des Maskierungswerts Rand (dⱼ',Randⱼ) gleich (1,0) ist, Speichern in dem ersten Akkumulator (R0) eines Ergebnisses der Addition des Inhalts des ersten Akkumulators (R0) und des Inhalts des zweiten Akkumulators (R1) und Speichern in dem zweiten Akkumulator (R1) eines Ergebnisses der Verdopplung des Werts, der in dem ersten Akkumulator (R0) in Runde i-1 gespeichert wird,
∘ wenn ein Paar der (n-1)-ten Bits des maskierten Schlüssels d' und des Maskierungswerts Rand (dₙ₋₁',Randₙ₋₁) gleich (0,1) oder (1,0) ist, Speichern in dem ersten Akkumulator eines Ergebnisses der Addition des Inhalts des ersten Akkumulators und des Inhalts des zweiten Akkumulators,
- Abrufen (S4) des Inhalts des ersten Akkumulators (R0) als das Skalarmultiplikationsoperationsergebnis der elliptischen Kurve,
- Durchführen (S5) des kryptographischen Algorithmus unter Verwendung des Skalarmultiplikationsoperationsergebnisses der elliptischen Kurve.

2. Verfahren zum Sichern gegen Seitenkanalangriffe einer Ausführung eines kryptographischen Prozesses, umfassend eine modulare Exponentiationsoperation einer Basis g mit einem geheimen Schlüssel d modulo einem Wert P, wobei d ein n-Bit-Skalar ist, mit n einer ganzen Zahl, n>= 1, wobei P eine positive ganze Zahl ist und g eine positive ganze Zahl kleiner als P ist,
wobei das Verfahren durch eine kryptographische Vorrichtung (100) durchgeführt wird, umfassend mindestens einen ersten Akkumulator (R0) und einen zweiten Akkumulator (R1), und umfassend:
- Erzeugen (S1) eines Maskierungswerts Rand, umfassend n Bits,
- additives Maskieren (S2) des geheimen Schlüssels d mit dem erzeugten Maskierungswert Rand durch Addieren des erzeugten Maskierungswerts Rand zu dem geheimen Schlüssel d, um einen maskierten Schlüssel d' zu erhalten,
- Berechnen (S3) eines Ergebnisses der modularen Exponentiationsoperation durch:
∘ Speichern des Werts g in einem ersten Akkumulator (R0),
∘ Speichern des Werts g² in einem zweiten Akkumulator (R1),
∘ für i eine ganze Zahl von 0 bis n-1, wobei die 0-ten Bits des maskierten Schlüssels d' und des Maskierungswerts Rand ihre höchstwertigen Bits sind, und wobei j die niedrigste ganze Zahl größer als i derart ist, dass ein Paar der j-ten Bits des maskierten Schlüssels d' und des Maskierungswerts Rand (dⱼ',Randⱼ) weder gleich (0,0) noch gleich (1,1) ist, Speichern von Zwischenwerten in dem ersten Akkumulator (R0) und in dem zweiten Akkumulator (R1) in Runde i durch:
∘ wenn ein Paar der i-ten Bits des maskierten Schlüssels d' und des Maskierungswerts Rand (dᵢ',Randᵢ) gleich (0,0) oder (1,1) ist, Speichern in dem zweiten Akkumulator (R1) eines Ergebnisses der Multiplikation modulo P des Inhalts des zweiten Akkumulators (R1) und des Inhalts des ersten Akkumulators (R0) und Speichern in dem ersten Akkumulator (R0) eines Ergebnisses einer Quadrierung modulo P des Inhalts des ersten Akkumulators (R0) modulo P,
∘ wenn ein Paar der i^{ten} Bits des maskierten Schlüssels d' und des Maskierungswerts Rand (dᵢ',Randᵢ) gleich (0,1) ist und ein Paar der j^{ten} Bits des maskierten Schlüssels d' und des Maskierungswerts Rand (dⱼ',Randⱼ) gleich (0,1) ist, Speichern in dem ersten Akkumulator (R0) eines Ergebnisses der Multiplikation modulo P des Inhalts des ersten Akkumulators (R0) und des Inhalts des zweiten Akkumulators (R1) und Speichern in dem zweiten Akkumulator (R1) eines Ergebnisses der Quadrierung modulo P des Inhalts des zweiten Akkumulators (R1),
∘ wenn ein Paar der i-ten Bits des maskierten Schlüssels d' und des Maskierungswerts Rand (dᵢ',Randᵢ) gleich (1,0) ist und ein Paar der j-ten Bits des maskierten Schlüssels d' und des Maskierungswerts Rand (dⱼ',Randⱼ) gleich (1,0) ist, Speichern in dem ersten Akkumulator (R0) eines Ergebnisses der Multiplikation modulo P des Inhalts des ersten Akkumulators (R0) und des Inhalts des zweiten Akkumulators (R1) und Speichern in dem zweiten Akkumulator (R1) eines Ergebnisses der Quadrierung modulo P des Inhalts des zweiten Akkumulators (R1),
∘ wenn ein Paar der i-ten Bits des maskierten Schlüssels d' und des Maskierungswerts Rand (dᵢ',Randᵢ) gleich (1,0) ist und ein Paar der j-ten Bits des maskierten Schlüssels d' und des Maskierungswerts Rand (dⱼ',Randⱼ) gleich (0,1) ist, Speichern in dem ersten Akkumulator (R0) eines Ergebnisses der Multiplikation modulo P des Inhalts des ersten Akkumulators (R0) und des Inhalts des zweiten Akkumulators (R1) und Speichern in dem zweiten Akkumulator (R1) des Ergebnisses der Quadrierung modulo P des Werts, der in dem ersten Akkumulator (R0) in Runde i-1 gespeichert wird,
∘ wenn ein Paar der i-ten Bits des maskierten Schlüssels d' und des Maskierungswerts Rand (dᵢ',Randᵢ) gleich (0,1) ist und ein Paar der j-ten Bits des maskierten Schlüssels d' und des Maskierungswerts Rand (dⱼ',Randⱼ) gleich (1,0) ist, Speichern in dem ersten Akkumulator (R0) eines Ergebnisses der Multiplikation modulo P des Inhalts des ersten Akkumulators (R0) und des Inhalts des zweiten Akkumulators (R1) und Speichern in dem zweiten Akkumulator (R1) eines Ergebnisses der Quadrierung modulo P des Werts, der in dem ersten Akkumulator (R0) in Runde i-1 gespeichert wird,
∘ wenn ein Paar der (n-1)-ten Bits des maskierten Schlüssels d' und des Maskierungswerts Rand (dₙ₋₁',Randₙ₋₁) gleich (0,1) oder (1,0) ist, Speichern in dem ersten Akkumulator eines Ergebnisses der Multiplikation modulo P des Inhalts des ersten Akkumulators und des Inhalts des zweiten Akkumulators,
- Abrufen (S4) des Inhalts des ersten Akkumulators (R0) als das Ergebnis der modularen Exponentiationsoperation,
- Durchführen (S5) des kryptographischen Algorithmus unter Verwendung des Skalarmultiplikationsoperationsergebnisses der elliptischen Kurve.

3. Verfahren nach Anspruch 1 oder 2, wobei die Größe des Maskierungswerts (Rand) 256, 512, 1024 oder 2048 Bits beträgt, abhängig von der Größe des geheimen Schlüssels.

4. Computerprogrammprodukt, das in den Speicher mindestens eines Computers direkt ladbar ist, umfassend Softwarecodeanweisungen zum Durchführen der Schritte nach einem der Ansprüche 1 bis 3, wenn das Produkt auf dem Computer abläuft.

5. Nichtflüchtiges, computerlesbares Medium, das ausführbaren Computercode speichert, der, wenn er durch eine kryptografische Vorrichtung (100) ausgeführt wird, umfassend ein Verarbeitungssystem, das mindestens einen Hardwareprozessor aufweist, die Schritte nach einem der Ansprüche 1 bis 3 durchführt.

6. Kryptografische Vorrichtung (100), umfassend:
- einen Prozessor (101), der konfiguriert ist, um die Schritte nach einem der Ansprüche 1 bis 3 auszuführen,
- mindestens einen ersten Akkumulator (R0) und einen zweiten Akkumulator (R1).

## Revendications

1. Procédé de sécurisation vis-à-vis d'attaques par canal auxiliaire d'une exécution d'un processus cryptographique comprenant une opération de multiplication scalaire à courbe elliptique d'une clé secrète d avec un point G d'une courbe elliptique, d étant un scalaire à n bits, n étant un nombre entier, n>= 1,
ledit procédé étant réalisé par un dispositif cryptographique (100) comprenant au moins un premier accumulateur (R0) et un second accumulateur (R1), et comprenant :
- la génération (S1) d'une valeur de masquage Rand comprenant n bits,
- le masquage additif (S2) de ladite clé secrète d avec ladite valeur de masquage Rand générée par ajout de ladite valeur de masquage Rand générée à ladite clé secrète d pour obtenir une clé masquée d',
- le calcul informatique (S3) d'un résultat de ladite opération de multiplication scalaire à courbe elliptique par :
∘ le stockage de la valeur 0 dans un premier accumulateur (R0),
∘ le stockage du point de la courbe elliptique G dans un second accumulateur (R1),
∘ pour i un nombre entier de 0 à n-1, dans lequel les 0^{ièmes} bits de la clé masquée d' et de la valeur de masquage Rand sont leurs bits les plus significatifs, et dans lequel j est le nombre entier le plus bas supérieur à i de telle sorte qu'une paire des j^{ièmes} bits de la clé masquée d' et de la valeur de masquage Rand (dⱼ', Randⱼ) n'est ni égale à (0,0), ni égale à (1,1), le stockage de valeurs intermédiaires dans ledit premier accumulateur (R0) et dans ledit second accumulateur (R1) au tour i par :
∘ lorsqu'une paire des i^{ièmes} bits de la clé masquée d' et de la valeur de masquage Rand (dᵢ', Randᵢ) est égale à (0,0) ou (1,1), le stockage dans le second accumulateur (R1) d'un résultat de l'addition du contenu du second accumulateur (R1) et du contenu du premier accumulateur (R0) et le stockage dans le premier accumulateur (R0) d'un résultat du doublement du contenu du premier accumulateur (R0),
∘ lorsqu'une paire des i^{ièmes} bits de la clé masquée d' et de la valeur de masquage Rand (dᵢ', Randi) est égale à (0,1) et une paire des j^{ièmes} bits de la clé masquée d' et de la valeur de masquage Rand (dⱼ', Randⱼ) est égale à (0,1), le stockage dans le premier accumulateur (R0) d'un résultat de l'addition du contenu du premier accumulateur (R0) et du contenu du second accumulateur (R1) et le stockage dans le second accumulateur (R1) d'un résultat du doublement du contenu du second accumulateur (R1),
∘ lorsqu'une paire des i^{ièmes} bits de la clé masquée d' et de la valeur de masquage Rand (dᵢ', Randi) est égale à (1,0) et une paire des j^{ièmes} bits de la clé masquée d' et de la valeur de masquage Rand (dⱼ', Randⱼ) est égale à (1,0), le stockage dans le premier accumulateur (R0) d'un résultat de l'addition du contenu du premier accumulateur (R0) et du contenu du second accumulateur (R1) et le stockage dans le second accumulateur (R1) d'un résultat du doublement du contenu du second accumulateur (R1),
∘ lorsqu'une paire des i^{ièmes} bits de la clé masquée d' et de la valeur de masquage Rand (dᵢ', Randᵢ) est égale à (1,0) et une paire des j^{ièmes} bits de la clé masquée d' et de la valeur de masquage Rand (dⱼ', Randⱼ) est égale à (0,1), le stockage dans le premier accumulateur (R0) d'un résultat de l'addition du contenu du premier accumulateur (R0) et du contenu du second accumulateur (R1) et le stockage dans le second accumulateur (R1) du résultat du doublement de la valeur stockée dans le premier accumulateur (R0) au tour i-1,
∘ lorsqu'une paire des i^{ièmes} bits de la clé masquée d' et de la valeur de masquage Rand (dᵢ', Randᵢ) est égale à (0,1) et une paire des j^{ièmes} bits de la clé masquée d' et de la valeur de masquage Rand (dⱼ', Randⱼ) est égale à (1,0), le stockage dans le premier accumulateur (R0) d'un résultat de l'addition du contenu du premier accumulateur (R0) et du contenu du second accumulateur (R1) et le stockage dans le second accumulateur (R1) d'un résultat du doublement de la valeur stockée dans le premier accumulateur (R0) au tour i-1,
∘ lorsqu'une paire des (n-1)^{ièmes} bits de la clé masquée d' et de la valeur de masquage Rand (dₙ₋₁', Randₙ₋₁) est égale à (0,1) ou (1,0), le stockage dans le premier accumulateur d'un résultat de l'addition du contenu du premier accumulateur et du contenu du second accumulateur,
- l'extraction (S4) du contenu du premier accumulateur (R0) en tant que résultat d'opération de multiplication scalaire à courbe elliptique,
- la réalisation (S5) dudit algorithme cryptographique à l'aide dudit résultat d'opération de multiplication scalaire à courbe elliptique.

2. Procédé de sécurisation vis-à-vis d'attaques par canal auxiliaire d'une exécution d'un processus cryptographique comprenant une opération d'exponentiation modulaire d'une base g avec une clé secrète d modulo une valeur P, d étant un scalaire à n bits, n étant un nombre entier, n>= 1, P étant un nombre entier positif et g étant un nombre entier positif inférieur à P,
ledit procédé étant réalisé par un dispositif cryptographique (100) comprenant au moins un premier accumulateur (R0) et un second accumulateur (R1), et comprenant :
- la génération (S1) d'une valeur de masquage Rand comprenant n bits,
- le masquage additif (S2) de ladite clé secrète d avec ladite valeur de masquage Rand générée par ajout de ladite valeur de masquage Rand générée à ladite clé secrète d pour obtenir une clé masquée d',
- le calcul informatique (S3) d'un résultat de ladite opération d'exponentiation modulaire par:
∘ le stockage de la valeur g dans un premier accumulateur (R0),
∘ le stockage de la valeur g² dans un second accumulateur (R1),
∘ pour i un nombre entier de 0 à n-1, dans lequel les 0^{ièmes} bits de la clé masquée d' et de la valeur de masquage Rand sont leurs bits les plus significatifs, et dans lequel j est le nombre entier le plus bas supérieur à i de telle sorte qu'une paire des j^{ièmes} bits de la clé masquée d' et de la valeur de masquage Rand (dⱼ', Randⱼ) n'est ni égale à (0,0), ni égale à (1,1), le stockage de valeurs intermédiaires dans ledit premier accumulateur (R0) et dans ledit second accumulateur (R1) au tour i par :
∘ lorsqu'une paire des i^{ièmes} bits de la clé masquée d' et de la valeur de masquage Rand (dᵢ', Randi) est égale à (0,0) ou (1,1), le stockage dans le second accumulateur (R1) d'un résultat de la multiplication modulo P du contenu du second accumulateur (R1) et du contenu du premier accumulateur (R0) et le stockage dans le premier accumulateur (R0) d'un résultat de la mise au carré modulo P du contenu du premier accumulateur (R0) modulo P,
∘ lorsqu'une paire des i^{ièmes} bits de la clé masquée d' et de la valeur de masquage Rand (dᵢ', Randi) est égale à (0,1) et une paire des j^{ièmes} bits de la clé masquée d' et de la valeur de masquage Rand (dⱼ', Randⱼ) est égale à (0,1), le stockage dans le premier accumulateur (R0) d'un résultat de la multiplication modulo P du contenu du premier accumulateur (R0) et du contenu du second accumulateur (R1) et le stockage dans le second accumulateur (R1) d'un résultat de la mise au carré modulo P du contenu du second accumulateur (R1),
∘ lorsqu'une paire des i^{ièmes} bits de la clé masquée d' et de la valeur de masquage Rand (dᵢ', Randᵢ) est égale à (1,0) et une paire des j^{ièmes} bits de la clé masquée d' et de la valeur de masquage Rand (dⱼ', Randⱼ) est égale à (1,0), le stockage dans le premier accumulateur (R0) d'un résultat de la multiplication modulo P du contenu du premier accumulateur (R0) et du contenu du second accumulateur (R1) et le stockage dans le second accumulateur (R1) d'un résultat de la mise au carré modulo P du contenu du second accumulateur (R1),
∘ lorsqu'une paire des i^{ièmes} bits de la clé masquée d' et de la valeur de masquage Rand (dᵢ', Randi) est égale à (1,0) et une paire des j^{ièmes} bits de la clé masquée d' et de la valeur de masquage Rand (dⱼ', Randⱼ) est égale à (0,1), le stockage dans le premier accumulateur (R0) d'un résultat de la multiplication modulo P du contenu du premier accumulateur (R0) et du contenu du second accumulateur (R1) et le stockage dans le second accumulateur (R1) du résultat de la mise au carré modulo P de la valeur stockée dans le premier accumulateur (R0) au tour i-1,
∘ lorsqu'une paire des i^{ièmes} bits de la clé masquée d' et de la valeur de masquage Rand (dᵢ', Randi) est égale à (0,1) et une paire des j^{ièmes} bits de la clé masquée d' et de la valeur de masquage Rand (dⱼ', Randⱼ) est égale à (1,0), le stockage dans le premier accumulateur (R0) d'un résultat de la multiplication modulo P du contenu du premier accumulateur (R0) et du contenu du second accumulateur (R1) et le stockage dans le second accumulateur (R1) d'un résultat de la mise au carré modulo P de la valeur stockée dans le premier accumulateur (R0) au tour i-1,
∘ lorsqu'une paire des (n-1)^{ièmes} bits de la clé masquée d' et de la valeur de masquage Rand (dₙ₋₁', Randₙ₋₁) est égale à (0,1) ou (1,0), le stockage dans le premier accumulateur d'un résultat de la multiplication modulo P du contenu du premier accumulateur et du contenu du second accumulateur,
- l'extraction (S4) du contenu du premier accumulateur (R0) en tant que résultat d'opération d'exponentiation modulaire,
- la réalisation (S5) dudit algorithme cryptographique à l'aide dudit résultat d'opération de multiplication scalaire à courbe elliptique.

3. Procédé selon la revendication 1 ou 2, dans lequel la taille de la valeur de masquage (Rand) est de 256, 512, 1024 ou 2048 bits en fonction de la taille de clé secrète.

4. Produit-programme d'ordinateur pouvant être chargé directement dans la mémoire d'au moins un ordinateur, comprenant des instructions de code logiciel pour la réalisation des étapes selon l'une quelconque des revendications 1 à 3, lorsque ledit produit est exécuté sur l'ordinateur.

5. Support non transitoire lisible par ordinateur stockant un code informatique exécutable qui, lorsqu'il est exécuté par un dispositif cryptographique (100) comprenant un système de traitement ayant au moins un processeur matériel, réalise les étapes selon l'une quelconque des revendications 1 à 3.

6. Dispositif cryptographique (100) comprenant :
- un processeur (101) configuré pour exécuter les étapes selon l'une quelconque des revendications 1 à 3,
- au moins un premier accumulateur (R0) et un second accumulateur (R1).
